# EUROPEAN PATENT SPECIFICATION

(11) **EP 1 618 028 B1**
(45) Date of publication and mention of the grant of the patent: **01.12.2010**
(21) Application number: 04727160.6
(22) Date of filing: 13.04.2004
(51) Int. Cl.: B62B 3/14, B62B 7/00

(54) **SHOPPING CART DESIGNED AS PLAY APPARATUS**
ALS SPIELGERÄT AUSGEBILDETER EINKAUFSWAGEN
CHARIOT D'ACHATS CONÇU COMME UN APPAREIL DE JEU

(30) Priority: 14.04.2003 NL 1023178
(43) Date of publication of application: 25.01.2006
(73) Proprietor: V.O.F. Vos & Vos Vormgeving, 4251 CR Werkendam (NL); Iljaja B.V., 4255 HX Nieuwendijk (NL); de Visser, Huibert Jan Cornelis, 4285 TC Woudrichem (NL)
(72) Inventor: VOS, Matthijs, NL-4251 AD Werkendam (NL)
(74) Representative: Winckels, Johannes Hubertus F.
(86) International application number: PCT/NL2004/000245
(87) International publication number: WO 2004/089720

(56) References cited:
- DE-U- 20 022 983
- DE-U- 29 615 604
- FR-A- 2 794 418
- US-A- 5 082 087
- US-A- 5 810 437
- US-B2- 6 513 817

## Description

The invention relates to a shopping cart designed as play apparatus. In order to keep children quiet during shopping it has already been proposed to provide a shopping cart designed as a play apparatus with the appearance of a car. These shopping carts designed as play apparatus are marketed under the name "Fun car" by Wanzl Metallwarenfabrik GmbH of Leipheim, Germany. The "Fun car" comprises a frame with castors, provided adjacent a rear side with a shopping basket and a push bar, further provided with a cabin with a child seat and a pretend steering device fixed onto the frame in front of the shopping basket.

What is achieved by designing the shopping cart accordingly as play apparatus, is that to children, the shopping cart has an appealing appearance, while further, during shopping, a child can be given the impression that it drives the shopping cart.

A drawback of the know shopping cart designed as play apparatus is that, when it is not used, it occupies relatively much space. In addition thereto, compared to the customary shopping cart, the shopping basket is relatively small. Further, the known shopping cart designed as play apparatus is relatively expensive and the appearance of the shopping cart cannot be changed easily.

The invention has for its object a shopping cart designed as play apparatus with which, while maintaining the advantages mentioned, the drawbacks mentioned can be avoided. To that end, the invention provides a play apparatus, comprising a nestable shopping cart with a frame-supported shopping basket provided with castors, which shopping cart is provided with a child seat detachably connected to the shopping basket, arranged adjacent the front side on the inside of the shopping basket, and a decoration shield, detachably connected to the basket adjacent the front side on the outside of the basket.

By providing the shopping basket of a conventional shopping cart adjacent the nose with a detachable child seat inside the shopping basket and a detachable decoration shield at the outside of the basket, a shopping cart already present in the shop can be executed as play apparatus. With the decoration shield, around the nose of the shopping cart, a play space can be realized, for instance a scooter, an elephant or a plane, by giving the decoration shield the shape and appearance of the front part of a scooter, the head of an elephant or the nose of a plane, respectively. When the seat and the decoration shield have been detached, the shopping cart can be stored in the customary manner, nested in one row with other shopping carts, so that it takes up little space. The child seat and the decoration shield can be stored separately from the shopping cart, for instance in a wall rack. By using a conventional shopping cart, no investments are required for a special shopping cart and further, the spacious basket of such a cart can be used.

Patent publication FR 2 794 418 discloses vehicle simulating accessories for shopping carts.

The child seat and the decoration shield can, each separately, be attached to the basket so that one type of child seat can be combined with different decoration shields on which, each time, other themes can be expressed. Such an assembly of loose parts can have as an advantage that loose parts are light-weight and easy to manipulate.

The child seat and the decoration shield can also be fixedly connected to each other or detachably, by means of a quick-detachable coupling. This can have the advantage that the assembly of the child seat and decoration shield can rapidly be placed on the basket of the shopping cart.

By placing the child seat adjacent the front side within the shopping basket, the nose of the basket can serve as protection for the child.

In an advantageous manner, the child seat and/or the decoration shield are provided with at least one overhang bracket with two legs connected by a connecting part, defining a groove for receiving the wall of the basket of the shopping cart therein, so that the child seat and/or the decoration shield can be suspended in a substantially downward movement with the legs on either side of the wall of the basket, over the edge of the basket. Preferably, the edge of the basket then supports the connecting part between the legs. It is noted that at least one of the legs of the overhang bracket can be integrated with the child seat and/or decoration shield.

Preferably, the seat is provided with one or more overhang brackets with which, during use, at least two points of support are formed on which the seat bears, on or adjacent the front of the basket on the edge of the basket, while the seat is provided with at least one stop for forming, during use, through cooperation with the wall and/or the bottom of the basket, a further point of support for determining a fixed distance from the seat to the front side of the basket.

It will be clear that it is also possible, when the child seat and the decoration shield during use form one whole, to arrange the above-mentioned overhang bracket onto the decoration shield.

Preferably, the seat is provided with a substantially form-retaining seating element. However, it will be clear that the seat can also be designed with a seating element of resilient or flexible material, for instance when a seat is composed of carrier straps which can be folded together instead of being folded up.

Preferably, the seating element of the seat is arranged hanging above the bottom of the basket, so that between the seating element and the bottom, space remains clear for purchases. This can be achieved, for instance, by attaching the seating element at half the height of the wall of the basket, i.e. halfway between the bottom and the edge of the basket, to the inner leg of the overhang bracket.

In an advantageous manner, the seating element of the seat is collapsible, so that, when the seat is not used, virtually the entire inner space of the basket can be made available for purchases. This can be achieved in an elegant manner by attaching a front side of the seating element to the inner leg of the bracket with the aid of a hinge for pivotal movement about a horizontal pivot. With the seat in folded-out position, in which the seating element extends substantially horizontally, parallel to the bottom, the rear edge of the seat can be pivoted upwards so that the seat can be brought to a collapsed position in which the seating element extends substantially upright, parallel to the front side of the basket and the leg of the innermost bracket. Preferably, the hinge is provided with a stop, bounding the pivotal movement from the collapsed position to the folded-out position.

Preferably, the seat is further provided with a substantially form-retraining back support. However, it will be clear that the back support can also be designed with a back support from resilient or flexible material.

Preferably, the seat, the overhang bracket or the decoration shield are provided with a pretend steering device. The pretend steering device comprises at least one grip and can be designed as, for instance, a joystick, as a steering device or as a steering bar provided with two grips. When the pretend steering device is integrated in the decoration shield, for instance two grips can be provided on locations which correspond to the theme of the decoration shield, for instance on the ears of an elephant. In this context, pretend steering device is at least understood to mean a gripping element provided with a handgrip with which, for a child, a steering device can be simulated, which does not or not materially influence the steering of the shopping cart.

In this context, a nestable shopping cart is understood to mean a frame-supported shopping basket provided with castors, the frame and the shopping basket defining a nesting space accessible from the rear side of the shopping cart and narrowing from the rear side towards the front side, in which a similar shopping cart can be introduced.

Preferably, the shopping basket and the frame follow the contour of the nesting space and are, preferably, thin-walled, so that the shopping cart itself can also be accommodated in the nesting space of a similar shopping cart.

Preferably, the decoration shield is thin-walled and, during use, covers at least a part of the front side of the basket of the shopping cart. Preferably, during use, the shield also extends along the parts of the sides of the basket located adjacent the front side, so as to express a theme in a more realistic manner. To that end, the shield is provided in an elegant manner with a front surface which, during use, covers at least a part of the front side of the basket and with two side edges extending away from the front surface. Further, thus, a bumper can be realized with which a child accommodated in the child seat can be screened-off from the surroundings. In a similar manner, the shield preferably extends beyond the upper edge of the basket and/or beyond the bottom of the basket. Preferably, the decoration shield comprises one or several thin-walled plates, preferably from plastic material. In an advantageous manner, the decoration shield comprises a relief plate. The decoration shield is provided with a decoration, with which an appearance attractive to a child can be given to the shopping cart. As already elucidated, an example of such a decoration is the front part of a scooter, the head of an elephant or the nose of a plane. With the aid of the decoration shield a theme can be expressed at the nose of the shopping cart so that the shopping cart together with the child seat is made to form a play apparatus.

As already discussed, the decoration shield can be provided with overhang brackets for cooperation with the wall of the basket and/or coupling means for coupling the child seat to the decoration shield. Further, the decoration shield can be provided with handle bars for manipulating the decoration shield. Preferably, such handle bars are designed as gripping openings which are located, when the decoration shield has been attached to the shopping cart, just above the edge of the basket, in particular just above the parts of the side walls of the basket located adjacent the front side. Further, the decoration shield can be provided with a support which, during use, cooperates with the frame of the shopping cart and/or a window being or not being provided with a window pane.

The invention also relates to a method for designing a shopping cart as a play apparatus, as well as to a child seat for a shopping cart, a decoration shield for a shopping cart and to an assembly of a child seat and a decoration shield.

The invention will be further elucidated with reference to an exemplary embodiment which is represented in the drawing. In the drawing:
Fig. 1 schematically shows a perspective view of a play apparatus in accordance with the invention with a decoration shield designed as a scooter;
Fig. 2 schematically shows a perspective view of a play apparatus in accordance with the invention with a decoration shield designed as an elephant;
Fig. 3 schematically shows a perspective side-view of four nested shopping carts and a wall rack from which three assemblies of child seats and decoration shields are suspended;
Fig. 4 schematically shows a longitudinal cross section in side view of a shopping cart of Fig. 3 which, with the aid of the assembly of Fig. 3, is equipped as play apparatus.

The Figures are only schematic representations of the invention and are exclusively given by way of non-limitative exemplary embodiment.

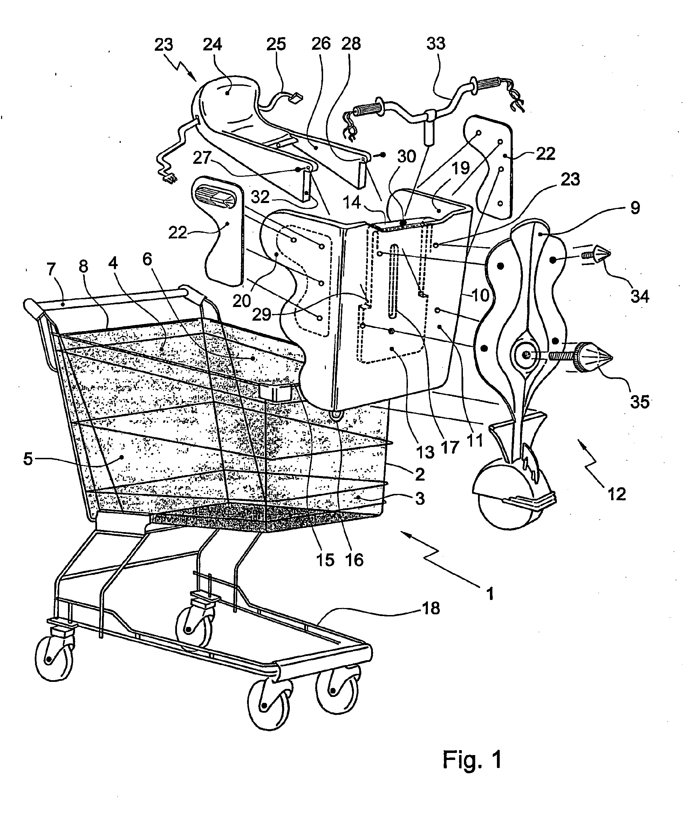

Fig. 1 shows a conventional shopping cart 1 provided with a shopping basket 2. The shopping basket 2 comprises a front wall 3, a rear wall 4 and two sidewalls 5, 6 each of which terminating in upper edges 8, 15 which are in one plane. Further, the basket 2 is attached to a wheelable frame 18, provided with a push bar 7 extending adjacent the rear wall 4 of the basket 2, along the upper edge 8 of the rear wall 4. To the front wall 3, a pivotable hook 16 is attached from which the user of the shopping cart 1 can suspend a shopping bag outside the basket 2. With the aid of the auxiliary modular means described hereinafter, the shopping cart 1 is designed as play apparatus for young children. Such shopping cart 1 can be used in, for instance, supermarkets, home furnishing department stores, garden centers and DIY-stores.

To the shopping cart 1, a decoration shield is detachably attached. The decoration shield screens off at least a part of the front wall 3, and hence also a child seated in the child seat described hereinafter. Further, the decoration shield has a decorative function for stimulating the imagination of the child. The decoration shield can be designed as an integrally formed element or with the aid of modules, as in the embodiment described here.

To the front wall 3, a basic element 10 is detachably attached by means of a U-shaped overhang bracket to be further described. The basic element 10 comprises a mounting plate 11 on which a decorative element is attached for forming a decoration shield 12. After having been attached to the shopping cart 1, the mounting plate 11 extends at least partly along the front wall 3 of the shopping basket 2. The mounting plate 11 forms a first leg of the overhang bracket. A second leg, also called overhang hook 13, is connected to the mounting plate 11 by means of a connecting part 14 and is located at the inside of the basket 2 when the basic element 10 is attached to the front wall 3. Mounting plate 11, connecting part 14 and overhang hook 13 form the U-shaped overhang bracket. During use, the groove defined by the U-shaped overhang bracket receives the front wall 3 of the basket 2. The connecting part 14 then bears on the upper edge 15 of the front wall 3. By sliding the mounting plate 11 upwards, this can easily be detached from the shopping cart 1. The mounting plate 11 is further provided with a slit-shaped recess 17 extending substantially at right angles to the upper edge 15 of the front wall 3. During mounting of the mounting plate 11, the recess 17 is slid over the pivotable hook 16 so that the hook 16 is not clamped in U-shaped suspension bracket.

The basic element 10 further comprises two side parts 19, 20 covering at least of part of the sidewalls 5, 6 of the basket 2. The side parts 19, 20 are attached to the mounting plate 11 and prevent the basic element 10 from sliding sideways. The dimensions of the basic element 10 and the side parts 19, 20 are such that, also after mounting of these parts 10, 19, 20, the shopping cart 1 remains less wide at its front side than at its rear wall 4. In this manner, the deployment of the shopping cart 1 designed as play apparatus is virtually not restricted due to larger outside dimensions.

In a preferred embodiment, basic element 10 and side parts 19, 20 are integrally formed from plastic, for instance by means of a process of rotational moulding. When using a suitable plastic material, such as, for instance, polythene, a strong, light, inexpensive and child-friendly basic element 10 is obtained to which, in a simple manner, desired colours can be applied. Preferably, the basic element 10 and the side parts 19 are designed as double-walled panels which, optionally, can be filled for reinforcement.

In an alternative embodiment, the side parts 19, 20 are adjustable, so that the basic element 10 can be deployed in shopping carts 1 having different widths at the front wall 3 of the basket 2. The side parts 19, 20 are then attached in grooves of the basic element 10 which are oriented substantially at right angles to the connecting part 14. However, different concepts are possible too. By designing the basic element 10 in widths corresponding to the width of the front wall 3 of the basket 2, the side parts 19, 20 can be provided on the front wall 3 with a simple attachment construction without providing additional provisions such as the above-mentioned grooves.

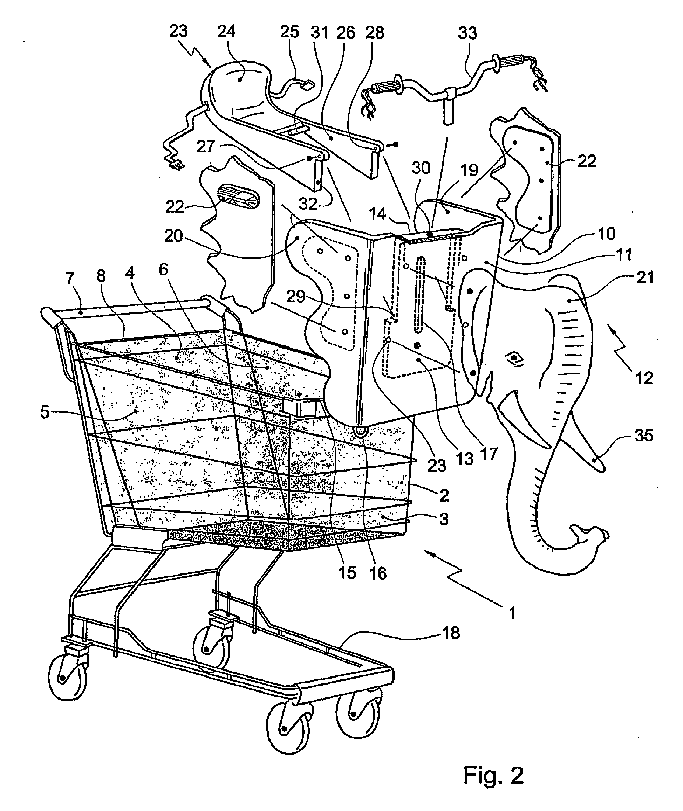

To the mounting plate 11, a decoration element in the shape of a scooter model 9 is attached. Different themes are also possible. For instance, in a different embodiment, as shown, for instance, in Fig. 2, the decoration element is designed in the shape of an elephant head 21. The material from which the decoration element has been built up preferably meets a number of requirements relative to weather resistance, environment and colourfastness. Such a material is., for instance, plastic, such as polystyrene. The decoration element is attached to the mounting plate 11 with the aid of snap or screw elements 34 in matching holes 23. In a preferred embodiment, a larger decoration attachment means such as a screw 35 in the shape of a headlight or a tusk reaches through the mounting plate 11 and the front wall 3 of the basket 2 as far as into the overhang hook 13 of the overhang bracket. With it, the basic element 10 is secured onto the basket 2 and the risk of the basic element 10 sliding in upward direction is reduced. Also, undesired bending of the overhang hook 13 in a direction away from the front wall 3 is prevented. Other decoration elements such as, for instance, direction indicators 22 are attached to the side parts 19, 20 of the basic element 10 in the same manner.

To the overhang hook 13, a collapsible seat 23 is attached in which a child, for instance in the age group of 2 to 5 years, can be seated. The seat is integrally formed and comprises a bucket 24, a safety belt 25 with childproof fastening and two supporting arms 26. The attachment to the overhang hook 13 is effected with the aid of pins 27 reaching through the openings 28 of the supporting arms 26 and openings 29 of the overhang hook 13, so that hinging snap connections are formed. Openings 29 have been provided sideways at different heights in the overhang hook 13 so that the seat 23 is height-adjustable. With this, adjustment to length and age of the child are possible. During use of the seat 23, the supporting arms 26 bear on the overhang hook 13 via stops 32. However, it is also possible to realize a stop which cooperates with the bottom of the basket 2, such as for instance a collapsible support for forming a point of support, so that a fixed distance between the seat and the front wall 3 of the basket 2 is determined. When the seat 23 is not used, it can be folded upwards via a hinging movement of the pins 27 in the openings 28 and 29, so as to occupy less space in the basket 2. In collapsed condition, the seat is fixed by a protruding fixing projection 30 on the upper side of the intermediate part 14, which, in a clamping manner, reaches into an opening 31 at the underside of the bucket 24.

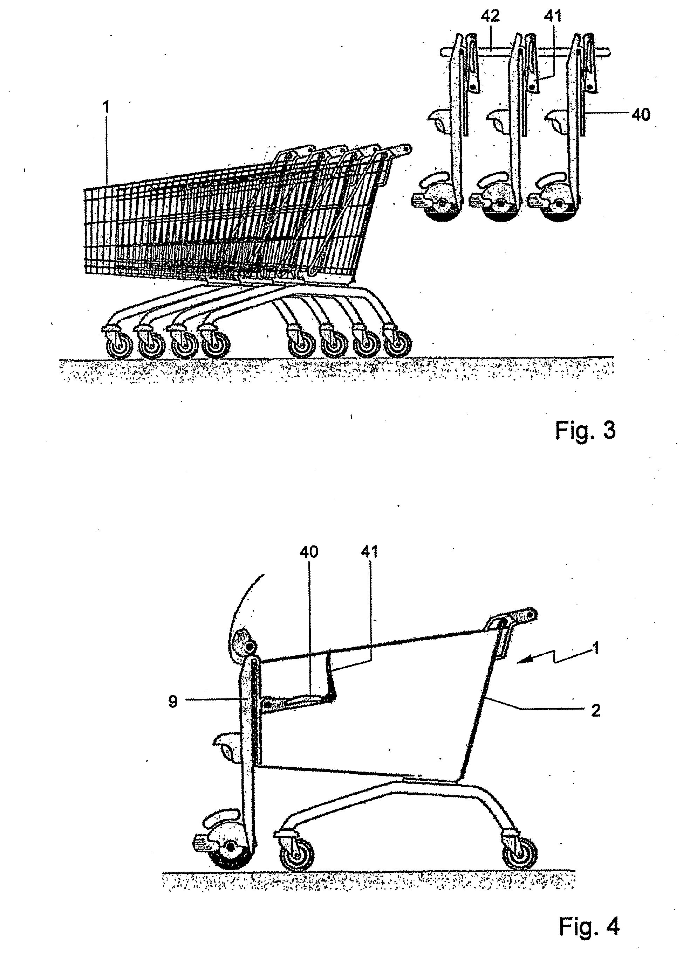

In a different embodiment in accordance with the invention, the seat is designed with a collapsible seat 40, as shown in Figs. 3 and 4. In folded-out condition, the seat 40 hangs substantially parallel to the bottom of the basket 2, while in collapsed condition, the seat 40 is substantially parallel to the front wall 3 of the basket 2. Preferably, a back support 41, foldable as well, is attached to the seating element 40, so that in collapsed condition, both the seating element 40 and the back support 41 are oriented substantially parallel to each other. When the basic element 10, including the decoration elements 22, 23 and the seat 23, have been detached from the shopping cart 1, the basic element 10 can be stored relatively simply without occupying much space, for instance by hanging the basic element 10 behind other basic elements 10 on a rack 42 as shown in Fig. 3. The shopping cart 1 can then be nested in the conventional manner in other shopping carts 1.

At the upper side of the intermediate part 14, a pretend steering device 33 is attached, optionally designed so as to be pivotable. By pivoting the pretend steering device 33, a child seated in the seat 23 can have the sensation of driving the shopping cart 1. This effect enhances the fantasy-effect of the shopping cart 1 designed as play apparatus in a positive manner. Preferably, the freedom of rotation of the pretend steering device 33 is limited to angles smaller than 90° relative to the front wall 3 of the basket 2. With this safety provision, the steering device 5, when in a position at right angles to the front wall 3 of the basket 2, is prevented from causing injuries to the child.

The invention is not limited to the exemplary embodiments described here. Many variants are possible, such as, for instance, decoration elements 21 designed as a clown, or specific girl or boy designs. In a different embodiment, decoration elements 21 are used for promotional themes. With the aid of, for instance, multi media provisions, such as displays, loudspeakers and data communication means, the decoration elements 21 can be prepared for multi-media uses. For instance visual or auditive commercial messages can be sent to the shopping cart 1, depending on the position of the shopping cart 1 in the shop or the supply room.

Such variants will be clear to the skilled person and are understood to fall within the range of the invention as set forth by the following claims.

## Claims

1. A shopping cart designed as play apparatus, comprising a nestable shopping cart (1) being with a frame-supported shopping basket (2) provided with castors, which shopping cart is **characterised by** being provided with a child seat (23), detachably connected to the basket, arranged adjacent the front side on the inside of the shopping basket and a decoration shield (12), detachably connected to the basket, arranged adjacent the front side on the outside of the shopping basket, wherein the child seat and/or the decoration shield is provided with at least one overhang bracket with two legs (11, 13) connected by a connecting part (14) which legs define a groove for receiving the wall of the basket of the shopping cart therein, and wherein the child seat and the decoration shield are connected to each other.

2. A shopping cart according to claim 1, wherein the child seat and the decoration shield are fixedly connected to each other.

3. A shopping cart according to claim 1, wherein the child seat and the decoration shield are detachably connected to each other.

4. A shopping cart according to any one of the preceding claims, wherein the child seat is provided with one or more overhang brackets with which, during use, at least two points of support are formed with which the seat bears on or adjacent the front side of the basket, the seat being provided with at least one stop (32) for forming, during use, by cooperation with the wall and/or the bottom of the basket, a further point of support for determining a fixed distance from the seat to the front side of the basket.

5. A shopping cart according to any one of the preceding claims, wherein the seat is provided with a seating element which can be adjusted between a folded-out position in which, during use, it extends substantially horizontally, parallel to the bottom of the basket, and a collapsed position in which it extends substantially upright, parallel to the front side of the basket.

6. A shopping cart according to any one of the preceding claims, wherein the seat, the decoration plate or an overhang bracket connected to the decoration plate is provided with a pretend steering device (33).

7. A shopping cart according to any one of the preceding claims, wherein the decoration shield comprises a relief plate provided with a decoration.

8. A shopping cart according to any one of the preceding claims, wherein the decoration shield is provided with a front surface which, during use, covers at least a part of the front side.

9. A shopping cart according to claim 8, wherein the decoration shield is provided with two side edges extending away from the front surface which, during use, extend along the parts of the sides of the basket of the shopping cart located adjacent the front side.

10. A shopping cart according to any one of the preceding claims, wherein the decoration shield is provided with a support which cooperates, during use, with the frame of the shopping cart.

11. A shopping cart according to any one of the preceding claims, wherein the decoration shield is provided with a window.

12. A child seat for a shopping cart according to any one of the preceding claims.

13. A child seat according to claim 12, comprising a seating element provided with at least one overhang bracket, which overhang bracket comprises two legs connected by a connecting part which legs define a groove for receiving the wall of the basket of a shopping cart therein.

14. A child seat according to claim 12 or 13, wherein the seat is provided with a seating element which is adjustable between a collapsed position in which the seating element extends substantially parallel to one of the legs of the bracket and a folded-out position in which the seat extends substantially at right angles to said leg.

15. A decoration shield for a shopping cart according to any one of the preceding claims,

16. A decoration shield according to claim 15, comprising a relief plate provided with a decoration, which relief plate is provided with at least one overhang bracket with two legs connected by a connecting part, which define a groove for receiving the wall of the basket of a shopping cart therein.

17. A decoration shield according to claim 15 or 16, wherein the relief plate is provided with a front surface which, during use, screens off at least a part of the front side of the basket of a shopping cart and with two side edges extending substantially at right angles relative to the front surface, which during use, extend along the parts of the sides of the basket of a shopping cart located adjacent the front side.

18. An assembly of a child seat according to at least one of claims 12 - 14 and a decoration shield according to at least one of claims 15 - 17.

19. A method for designing a shopping cart as play apparatus, wherein a child seat and/or a decoration plate are suspended in a substantially downwards movement from the edge of the basket of a shopping cart and wherein the edge of the basket of the shopping cart is received in a groove between two legs, connected by a connecting part, of an overhang bracket connected to the child seat and/or the decoration plate.

## Patentansprüche

1. Einkaufswagen, ausgestaltet als Spielgerät, mit einem einschiebbaren Einkaufswagen (1), der einen mit Laufrollen versehenen, rahmengetragenen Einkaufskorb (2) aufweist, wobei der Einkaufswagen **dadurch gekennzeichnet ist, dass** er mit einem abnehmbar an dem Korb befestigten Kindersitz (23), der innen am Einkaufskorb nahe an dessen Vorderseite angeordnet ist, und einem abnehmbar an dem Korb befestigten Dekorationsschild (12) versehen ist, der außen am Einkaufskorb nahe an dessen Vorderseite angeordnet ist, wobei der Kindersitz und/oder der Dekorationsschild mit mindestens einem Überhangbügel versehen ist, der zwei durch ein Verbindungsteil (14) verbundene Schenkel (11,13) aufweist, die einen Spalt zur Aufnahme der Wand des Korbs des Einkaufswagens bilden, und wobei der Kindersitz und der Dekorationsschild miteinander verbunden sind.

2. Einkaufswagen nach Anspruch 1, bei dem der Kindersitz und der Dekorationsschild fest miteinander verbunden sind.

3. Einkaufswagen nach Anspruch 1, bei dem der Kindersitz und der Dekorationsschild lösbar miteinander verbunden sind.

4. Einkaufswagen nach einem der vorhergehenden Ansprüche, bei dem der Kindersitz mit einem oder mehr Überhangbügeln versehen ist, mittels derer bei Benutzung mindestens zwei Haltepunkte gebildet werden, über die der Sitz unter Druck an der oder nahe der Vorderseite des Korbs anliegt, wobei der Sitz mit mindestens einem Anschlag (32) versehen ist, um bei Benutzung in Zusammenwirkung mit der Wand und/oder dem Boden des Korbs einen weiteren Haltepunkt zur Einhaltung eines festen Abstands von dem Sitz zu der Vorderseite des Korbs zu bilden.

5. Einkaufswagen nach einem der vorhergehenden Ansprüche, bei dem der Sitz mit einem Sitzelement versehen ist, das zwischen einer ausgeklappten Position, in der sich das Sitzelement bei Benutzung im Wesentlichen horizontal parallel zu dem Boden des Korbs erstreckt, und einer kollabierten Position einstellbar ist, in der sich das Sitzelement im Wesentlichen aufrecht parallel zu der Vorderseite des Korbs erstreckt.

6. Einkaufswagen nach einem der vorhergehenden Ansprüche, bei dem der Sitz, die Dekorationsplatte oder ein mit der Dekorationsplatte verbundener Überhangbügel mit einer imitierten Lenkvorrichtung (33) versehen ist.

7. Einkaufswagen nach einem der vorhergehenden Ansprüche, bei dem der Dekorationsschild des Einkaufswagens eine mit einer Dekoration versehene Reliefplatte aufweist.

8. Einkaufswagen nach einem der vorhergehenden Ansprüche, bei dem der Dekorationsschild eine Vorderfläche aufweist, die bei Benutzung mindestens einen Teil der Vorderseite bedeckt.

9. Einkaufswagen nach Anspruch 8, bei dem der Dekorationsschild mit zwei von der Vorderfläche abstehenden Seitenrandteilen versehen ist, die sich bei Benutzung entlang derjenigen Teile der Seiten des Korbs des Einkaufswagens erstrecken, welche nahe der Vorderseite gelegen sind.

10. Einkaufswagen nach einem der vorhergehenden Ansprüche, bei dem der Dekorationsschild mit einer Halterung versehen ist, die bei Benutzung mit dem Rahmen des Einkaufswagens zusammenwirkt.

11. Einkaufswagen nach einem der vorhergehenden Ansprüche, bei dem der Dekorationsschild mit einem Fenster versehen ist.

12. Kindersitz für einen Einkaufswagen nach einem der vorhergehenden Ansprüche.

13. Kindersitz nach Anspruch 12, mit einem Sitzelement, das mit mindestens einem Überhangbügel versehen ist, der zwei durch ein Verbindungsteil verbundene Schenkel aufweist, die einen Spalt zur Aufnahme der Wand des Korbs des Einkaufswagens bilden.

14. Kindersitz nach Anspruch 12 oder 13, bei dem der Sitz mit einem Sitzelement versehen ist, das zwischen einer kollabierten Position, in der sich das Sitzelement im Wesentlichen parallel zu einem der Schenkel des Bügels erstreckt, und einer ausgeklappten Position einstellbar ist, in der sich der Sitz im Wesentlichen rechtwinklig zu dem Schenkel erstreckt.

15. Dekorationsschild für einen Einkaufswagen nach einem der vorhergehenden Ansprüche.

16. Dekorationsschild nach Anspruch 15, mit einer Reliefplatte, die mit einer Dekoration versehen ist, wobei die Reliefplatte mit mindestens einem Überhangbügel versehen ist, der zwei durch ein Verbindungsteil verbundene Schenkel aufweist, die einen Spalt zur Aufnahme der Wand des Korbs des Einkaufswagens bilden.

17. Dekorationsschild nach Anspruch 15 oder 16, bei dem die Reliefplatte eine Vorderfläche, die bei Benutzung mindestens einen Teil der Vorderseite des Korbs eines Einkaufswagens abschirmt, und zwei im Wesentliche rechtwinklig zu der Vorderfläche verlaufende Seitenrandteile aufweist, die sich bei Benutzung entlang derjenigen Teile der Seiten des Korbs eines Einkaufswagens erstrecken, welche nahe der Vorderseite gelegen sind.

18. Anordnung aus einem Kindersitz nach mindestens einem der Ansprüche 12-14 und einem Dekorationsschild nach mindestens einem der Ansprüche 15-17.

19. Verfahren zur Ausgestaltung eines Einkaufswagens als Spielgerät, bei dem ein Kindersitz und/oder eine Dekorationsplatte in einer im Wesentlichen abwärts gerichteten Bewegung an dem Rand des Korbs eines Einkaufswagens aufgehängt werden und bei dem der Rand des Korbs des Einkaufswagens in einem Spalt zwischen zwei durch ein Verbindungsteil miteinander verbundenen Schenkeln eines Überhangbügels aufgenommen wird, der mit dem Kindersitz und/oder der Dekorationsplatte verbunden ist.

## Revendications

1. Chariot d'achat conçu comme un appareil de jeu, comprenant un chariot d'achat (1) susceptible d'être emboîté, avec un panier d'achat (2) supporté sur un châssis équipé de roulettes, ledit chariot d'achat (1) étant **caractérisé en ce qu'**il est équipé d'un siège pour enfants (23), relié de façon détachable au panier et agencé adjacent au côté avant à l'intérieur du panier d'achat, et d'un panneau de décoration (12) relié de façon détachable au panier, agencé adjacent au côté avant sur l'extérieur du panier d'achat, dans lequel le siège pour enfants et/ou le panneau de décoration est pourvu d'au moins une monture en surplomb avec deux pattes (11, 13) reliées par une pièce de liaison (14), lesdites pattes définissant une gorge pour recevoir la paroi du panier du chariot d'achat à l'intérieur, et dans lequel le siège pour enfants et le panneau de décoration sont reliés l'un à l'autre.

2. Chariot d'achat selon la revendication 1, dans lequel le siège pour enfants et le panneau de décoration sont reliés de manière fixe l'un à l'autre.

3. Chariot d'achat selon la revendication 1, dans lequel le siège pour enfants et le panneau de décoration sont reliés de façon détachable l'un à l'autre.

4. Chariot d'achat selon l'une quelconque des revendications précédentes, dans lequel le siège pour enfants est équipé d'un ou plusieurs crochets en surplomb au moyen duquel, en utilisation, au moins deux points de support sont formés avec lequel le siège est porté sur le côté avant du panier ou en position adjacente à ce côté avant, le siège étant équipé d'au moins un arrêt (32) pour former, en utilisation, par coopération avec la paroi et/ou le fond du panier, un autre point de support pour déterminer une distance fixe depuis le siège jusqu'au côté avant du panier.

5. Chariot d'achat selon l'une quelconque des revendications précédentes, dans lequel le siège est pourvu d'un élément d'assise qui peut être ajusté entre une position déployée dans laquelle, en utilisation, il s'étend sensiblement horizontalement et parallèle au fond du panier, et une position rabattue dans laquelle il s'étend sensiblement verticalement et parallèle au côté avant du panier.

6. Chariot d'achat selon l'une quelconque des revendications précédentes, dans lequel le siège, la plaque de décoration, ou une monture en surplomb relié à la plaque de décoration, est pourvu d'un dispositif de commande de tensionnement (33).

7. Chariot d'achat selon l'une quelconque des revendications précédentes, dans lequel le panneau de décoration comprend une plaque en relief pourvue d'une décoration.

8. Chariot d'achat selon l'une quelconque des revendications précédentes, dans lequel le panneau de décoration est pourvu d'une surface antérieure qui, pendant l'utilisation, couvre au moins une partie du côté avant.

9. Chariot d'achat selon la revendication 8, dans lequel le panneau de décoration est pourvu de deux bordures latérales s'étendant en éloignement de la surface avant et qui, en utilisation, s'étendent le long des parties des côtés du panier du chariot d'achat qui sont situés adjacents au côté avant.

10. Chariot d'achat selon l'une quelconque des revendications précédentes, dans lequel le panneau de décoration est pourvu d'un support qui coopère, en utilisation, avec le châssis du chariot d'achat.

11. Chariot d'achat selon l'une quelconque des revendications précédentes, dans lequel le panneau de décoration est pourvu d'une fenêtre.

12. Siège pour enfants pour un chariot d'achat selon l'une quelconque des revendications précédentes.

13. Siège pour enfants selon la revendication 12, comprenant un élément d'assise pourvu d'au moins une monture en surplomb, lequel crochet en surplomb comprend deux pattes reliées par une pièce de liaison, lesdites pattes définissant une gorge pour recevoir la paroi du panier d'un chariot d'achat à l'intérieur.

14. Siège pour enfants selon la revendication 12 ou 13, dans lequel le siège est pourvu d'un élément d'assise qui peut être ajusté entre une position rabattue dans laquelle l'élément de siège s'étend sensiblement parallèlement à l'une des pattes du crochet et une position déployée dans lequel le siège s'étend sensiblement à angle droit par rapport à ladite patte.

15. Panneau de décoration pour un chariot d'achat selon l'une quelconque des revendications précédentes.

16. Panneau de décoration selon la revendication 15, comprenant une plaque en relief pourvue d'une décoration, ladite plaque en relief étant pourvue d'au moins une monture en surplomb avec deux pattes reliées par une pièce de liaison, qui définissent une gorge pour recevoir la paroi du panier d'un chariot d'achat à l'intérieur.

17. Panneau de décoration selon la revendication 15 ou 16, dans lequel la plaque en relief est pourvue d'une surface avant qui, en utilisation, masque au moins une partie du côté avant du panier d'un chariot d'achat et comportant deux bordures latérales s'étendant sensiblement à angle droit par rapport à la surface avant et qui, en utilisation, s'étendent le long des parties du panier d'un chariot d'achat situées adjacentes au côté avant.

18. Ensemble formé d'un siège pour enfants selon l'une des revendications 12 à 14 et d'un panneau de décoration selon l'une des revendications 15 à 17.

19. Procédé pour concevoir un chariot d'achat comme un appareil de jeux, dans lequel un siège pour enfants et/ou une plaque de décoration sont suspendus, dans un mouvement sensiblement descendant, depuis le bord d'un panier d'un chariot d'achat, et dans lequel le bord du panier du chariot d'achat est reçu dans une gorge entre deux pattes, reliées par une pièce de liaison, d'une monture en surplomb relié au siège pour enfants et/ou à la plaque de décoration.
